# EUROPÄISCHE PATENTSCHRIFT

(11) **EP 2 938 441 B1**
(45) Veröffentlichungstag und Bekanntmachung des Hinweises auf die Patenterteilung: **02.08.2017**
(21) Anmeldenummer: 13794817.0
(22) Anmeldetag: 18.11.2013
(51) Int. Cl.: B06B 1/16, E01C 19/28

(54) **SCHWINGUNGSERREGER FÜR BODENVERDICHTUNGSVORRICHTUNGEN**
VIBRATION EXCITER FOR SOIL COMPACTING DEVICES
GÉNÉRATEUR DE VIBRATIONS POUR DISPOSITIFS DE COMPACTAGE DU SOL

(30) Priorität: 27.12.2012 DE 102012025378
(43) Veröffentlichungstag der Anmeldung: 04.11.2015
(73) Patentinhaber: Wacker Neuson Produktion GmbH & Co. KG, 80809 München (DE)
(72) Erfinder: BARTL, Andreas, 85457 Wörth (DE)
(74) Vertreter: Müller Hoffmann & Partner
(86) Internationale Anmeldenummer: PCT/EP2013/003471
(87) Internationale Veröffentlichungsnummer: WO 2014/101977

(56) Entgegenhaltungen:
- DE-A1- 3 234 380
- DE-A1- 10 105 687
- DE-B3-102004 028 715
- DE-U1-202006 004 707
- FR-A5- 2 170 777

## Beschreibung

Die Erfindung betrifft einen Schwingungserreger für eine Bodenverdichtungsvorrichtung.

Lenkbare Bodenverdichtungsvorrichtungen bzw. Vibrationsplatten zum Einsatz im Baugewerbe sind seit langem bekannt. Beispielsweise zeigen die G 78 18 542.9 und DE 101 05 687 A1 lenkbare Bodenverdichtungsvorrichtungen, bei denen ein Schwingungserreger in einem Gehäuse auf einer Bodenkontaktplatte angeordnet ist.

Die gezeigten Schwingungserreger weisen zwei zueinander gegenläufig drehbar gekoppelte Unwuchtwellen mit daran ausgebildeten Unwuchtmassen auf, deren Phasenlage relativ zueinander verstellbar ist. Durch ein Verstellen der Phasenlage lässt sich die Wirkungsrichtung eines durch die rotierenden Unwuchtmassen erzeugten resultierenden Kraftvektors derart verändern, dass sich die Bodenverdichtungsvorrichtung in Vorwärts- und Rückwärtsrichtung bewegt.

Weiterhin sind auf einer der Unwuchtwellen zwei relativ zu der Unwuchtwelle verdrehbare Unwuchtmassen axial versetzt zueinander angeordnet. Die Lage jeder der beiden Unwuchtmassen bezüglich der sie tragenden Unwuchtwelle ist individuell einstellbar, so dass im Zusammenwirken mit der gegenüberliegenden, weiteren Unwuchtwelle resultierende Kraftvektoren erzielt werden können, die ein Giermoment um eine Hochachse der Bodenverdichtungsvorrichtung erzeugen. Hierdurch werden eine Drehung der Bodenverdichtungsvorrichtung und damit eine Lenkung möglich, ohne dass weitere Kräfte von außen, beispielsweise durch einen Bediener, auf die Bodenverdichtungsvorrichtung einwirken müssen.

Aus der DE 20 2006 004 707 U1 ist ein Schwingungserreger mit drei in einem Gehäuse parallel nebeneinander gelagerten Unwuchtwellen bekannt. In der mittleren Unwuchtwelle ist eine Verstelleinrichtung zum Verdrehen einer zugeordneten Unwuchtmasse relativ zu einer anderen Unwuchtmasse vorgesehen.

In der FR 2 170 777 A5 wird ein Schwingungserreger beschrieben, mit zwei in einem Gehäuse parallel zueinander gelagerten Unwuchtwellen, von denen eine in zwei Unwuchtwellenhälften geteilt ist. Die beiden Unwuchtwellenhälften können mithilfe einer Verdrehvorrichtung relativ zueinander verdreht werden.

Der Erfindung liegt die Aufgabe zugrunde, einen Schwingungserreger anzugeben, der bei einer kompakten und gleichzeitig robusten Ausführung eine hohe Drehdynamik erreicht und somit das Fahrverhalten der Bodenverdichtungsvorrichtung verbessert.

Die Aufgabe wird erfindungsgemäß durch einen Schwingungserreger gemäß Patentanspruch 1 gelöst. Vorteilhafte Weiterentwicklungen der Erfindung sind den abhängigen Ansprüchen zu entnehmen.

Ein Schwingungserreger für eine Bodenverdichtungsvorrichtung weist eine erste Unwuchtwelle, an der wenigstens eine erste Unwuchtmasse angeordnet ist, eine zu der ersten Unwuchtwelle achsparallel angeordnete, mit der ersten Unwuchtwelle formschlüssig gegenläufig drehbar gekoppelte zweiten Unwuchtwelle, an der wenigstens eine zweite Unwuchtmasse angeordnet ist, eine Antriebsvorrichtung zum drehenden Antreiben einer der Unwuchtwellen, und eine durch eine Betätigungseinrichtung betätigbare Verdrehvorrichtung zum Verdrehen der zweiten Unwuchtmasse relativ zu der ersten Unwuchtmasse auf. Die zweite Unwuchtwelle weist wenigstens einen Hohlraum auf, und die Betätigungseinrichtung ist wenigstens teilweise innerhalb des Hohlraums angeordnet.

Die erste Unwuchtwelle und die zweite Unwuchtwelle können innerhalb eines Gehäuses angeordnet sein, wobei das Gehäuse mit einer Bodenkontaktplatte der Bodenverdichtungsvorrichtung gekoppelt ist. Der Elektro- oder Verbrennungsmotor kann sich auf der Obermasse befinden, beispielsweise nicht direkt am Gehäuse (Erregergehäuse). Die Kraftübertragung kann per Riemen oder hydraulisch erfolgen. An und/oder in dem Gehäuse kann die Antriebsvorrichtung, beispielsweise ein Elektro- oder Verbrennungsmotor, angeordnet sein und mit der angetriebenen Unwuchtwelle, beispielsweise mittels einer Welle und/oder einer Riemenvorrichtung, gekoppelt sein. Die Antriebsvorrichtung kann beispielsweise mit der ersten Unwuchtwelle gekoppelt sein.

Durch die formschlüssige, gegenläufig drehbare Kopplung kann die Antriebsvorrichtung die erste und die zweite Unwuchtwelle und die daran ausgebildeten Unwuchtmassen in eine gegenläufige Rotationsbewegung versetzen. Durch einen resultierenden Kraftvektor der auf die Unwuchtmassen wirkenden Fliehkräfte kann dadurch eine Arbeitsbewegung der Bodenkontaktplatte erzeugt werden.

Die Verdrehvorrichtung ermöglicht es, die zweiten Unwuchtwelle angeordnete Unwuchtmasse beispielsweise relativ zu der an der ersten Unwuchtwelle angeordneten Unwuchtmasse zu verdrehen. Hierdurch wird deren Phasenlage der zweiten Unwuchtmasse relativ zur an der ersten Unwuchtwelle angeordneten Unwuchtmasse derart verändert, dass der resultierende Kraftvektor eine Vorwärts- oder Rückwärtsbewegung sowie eine Rüttelbewegung im Stand bewirkt.

Weiterhin ist erfindungsgemäß eine dritte Unwuchtmasse an der zweiten Unwuchtwelle angeordnet. In diesem Fall ermöglicht die Verdrehvorrichtung, wenigstens eine der an der zweiten Unwuchtwelle angeordneten Unwuchtmassen beispielsweise relativ zu der jeweils anderen der an der zweiten Unwuchtwelle angeordneten Unwuchtmassen individuell zu verdrehen. Bei der durch die Antriebsvorrichtung erzeugbaren gegenläufigen Drehung der beiden Unwuchtwellen kann gemäß dem resultierenden Kraftvektor der auf die Unwuchtmassen wirkenden Fliehkräfte durch die relative Verdrehung der auf der zweiten Unwuchtwelle angeordneten Unwuchtmassen zueinander ein Giermoment erzeugt werden, welches eine Drehung der Bodenverdichtungsvorrichtung um ihre (im Wesentlichen senkrecht zur Bodenfläche stehende) Hochachse und damit auch eine Lenkung der Arbeitsbewegung ermöglicht.

Zudem kann der Verdrehvorrichtung entsprechend zusätzlich auch eine weitere Verdrehvorrichtung zum Verdrehen beispielsweise der dritten Unwuchtmasse relativ zu der zweiten Unwuchtmasse vorgesehen sein. Diese beispielsweise spiegelsymmetrische Ausführung des Schwingungserregers bzw. der Bodenverdichtungsvorrichtung ermöglicht ein ausgeglichenes beidseitiges Lenk- und Fahrverhalten.

Das Verdrehen kann beispielsweise auf eine Bedieneranforderung im Stillstand und/oder während des Arbeitsbetriebs der Bodenverdichtungsvorrichtung vorgenommen werden. Dies ermöglicht es dem Bediener, beispielsweise durch Betätigen einer Bedienvorrichtung der Bodenverdichtungsvorrichtung oder durch Betätigen einer Bedienvorrichtung an einer Fernsteuerung der Bodenverdichtungsvorrichtung, das Giermoment und damit die Bewegungsrichtung der Bodenverdichtungsvorrichtung zu steuern.

Zumindest Teile der Verdrehvorrichtung, wie beispielsweise die Betätigungsvorrichtung, die eine Kolben/Zylinder-Einheit aufweist, sind wenigstens teilweise innerhalb des Hohlraums der zweiten Unwuchtwelle angeordnet. Beispielsweise kann die zweite Unwuchtwelle wenigstens teilweise als Hohlwelle ausgebildet sein, in der die Verdrehvorrichtung bzw. Teile der Verdrehvorrichtung wie beispielsweise der Steuerschieber und/oder die Betätigungsvorrichtung bzw. die Kolben/ZylinderEinheit angeordnet sein können.

Diese Anordnung von Teilen der Verdrehvorrichtung innerhalb der zweiten Unwuchtwelle ermöglicht es, Bauraum insbesondere in den Bereichen seitlich der zweiten Unwuchtwelle zu sparen. Im Vergleich zum Stand der Technik ist es nicht mehr notwendig, seitlich neben der zweiten Unwuchtwelle Bauraum zur Anordnung von Verdrehvorrichtungen vorzusehen. Folglich kann die zweite Unwuchtwelle breit ausgeführt sein und sich z.B. über nahezu die gesamte Breite des Schwingungserregers erstrecken. An der breit ausgeführten zweiten Unwuchtwelle können die erste und zweite Unwuchtmasse mit großem Abstand zu einer senkrecht zur Bodenkontaktplatte stehenden Mittel- bzw. Symmetrieebene der Bodenverdichtungsvorrichtung angeordnet sein. Hierdurch kann ein langer Hebelarm der durch die rotierende zweite und dritte Unwuchtmasse erzeugten Fliehkräfte und somit eine hohe Gierrate erreicht werden.

Weiterhin ist es bei einer derartigen Anordnung möglich, die Gesamtabmessung des Schwingungserregers schmal und die Bodenverdichtungsvorrichtung kompakt auszuführen.

In einer Ausführungsform umschließt eine Umlaufbahn der zweiten Unwuchtmasse und/oder der dritten Unwuchtmasse um die zweite Unwuchtwelle den Hohlraum, die Betätigungseinrichtung, einen Kolben der Kolben/Zylinder-Einheit und/oder einen Zylinder der Kolben/Zylinder-Einheit wenigstens teilweise.

Beispielsweise ist es möglich, die an der zweiten Unwuchtwelle ausgebildeten Unwuchtmassen außen an der zweiten Unwuchtwelle anzuordnen, z.B. mit möglichst großer Entfernung zur mittigen Symmetrieebene der Bodenverdichtungsvorrichtung. Insbesondere kann die zweite und/oder dritte Unwuchtmasse weit außen, dicht an einer Wandung des Gehäuses angeordnet sein, da kein separater Bauraum seitlich neben der zweiten Unwuchtwelle vorgesehen werden muss, um die beispielsweise vollständig in den jeweiligen Unwuchtwellenhälften aufgenommene Verdrehvorrichtung anzuordnen. Hierdurch kann die mögliche Dreh- bzw. Gierrate weiter erhöht werden.

In einer erfindungsgemäßen Ausführungsform ist wenigstens die Betätigungseinrichtung bzw. Kolben/Zylinder-Einheit durch eine Drehentkopplungseinrichtung von einer Rotation der zweiten Unwuchtwelle entkoppelbar. Die Drehentkopplungsvorrichtung kann beispielsweise eine Lagervorrichtung bzw. ein Lager wie beispielsweise ein Kugellager aufweisen, wobei die Lagervorrichtung z.B. die zumindest teilweise in dem Hohlraum angeordnete Kolben/Zylindereinheit zumindest von Teilen der zweiten Unwuchtwelle drehentkoppelt. Dies ermöglicht es, Wechselwirkungen zwischen der rotierenden zweiten Unwuchtwelle und der bzw. den Verdrehvorrichtungen zu vermeiden. Erfindungsgemäß weist die zweite Unwuchtwelle eine die zweite Unwuchtmasse tragende erste Unwuchtwellenhälfte und eine zur ersten Unwuchtwellenhälfte koaxial angeordnete, relativ zur ersten Unwuchtwellenhälfte verdrehbare, die dritte Unwuchtmasse tragende zweite Unwuchtwellenhälfte auf.

Durch die Verdrehvorrichtung ist die erste Unwuchtwellenhälfte relativ zu der zweiten Unwuchtwellenhälfte verdrehbar.

Da erfindungsgemäß die zweite Unwuchtwellenhälfte geteilt ist und die beiden Unwuchtwellenhälften relativ zueinander verdrehbar sind, können die jeweiligen Unwuchtmassen direkt an den jeweiligen Unwuchtwellenhälften ausgebildet bzw. daran befestigt sein. Die relative Verdrehbarkeit der beiden an der zweiten Unwuchtwelle angeordneten Unwuchtmassen zueinander wird durch die relative Verdrehbarkeit der Unwuchtwellenhälften zueinander erreicht.

Im Gegensatz zum Stand der Technik ist es folglich nicht notwendig, die an der zweiten Unwuchtwelle angeordneten Unwuchtmassen relativ verdrehbar zur zweiten Unwuchtwelle anzuordnen. Dies wird im Stand der Technik beispielsweise durch ein Anordnen der Unwuchtmassen an relativ zur Unwuchtwelle verdrehbaren Verstellhülsen erreicht.

Durch die Teilung der zweiten Unwuchtwelle wird folglich eine robuste und kostengünstige Gestaltung der zweiten Unwuchtwelle erreicht.

Zudem können die jeweiligen Verdrehvorrichtungen in Hohlräumen der beiden Unwuchtwellenhälften angeordnet sein. Die Verdrehvorrichtungen können in dieser Anordnung die Unwuchtwellenhälften gegeneinander verdrehen und beispielsweise in einem Kopplungsbereich, in dem die Unwuchtwellenhälften beispielsweise stirnseitig miteinander gekoppelt sind, wirken. Die Unwuchtwellenhälften können als zumindest teilweise hohle Wellenhälften bzw. Wellenstummel ausgeführt werden, die die jeweiligen Verdrehvorrichtungen aufnehmen.

In einer Variante dieser Ausführungsform ist eine Koppelvorrichtung zum formschlüssigen, relativ zueinander verdrehbaren Koppeln der ersten Unwuchtwellenhälfte und der zweiten Unwuchtwellenhälfte vorgesehen.

Die Koppelvorrichtung ermöglicht ein formschlüssiges Koppeln der beiden Unwuchtwellenhälften und damit ein gemeinsames Rotationsverhalten der beiden Unwuchtwellenhälften als zweite Unwuchtwelle. Die relative Verdrehbarkeit der Kopplung ermöglicht es, die an den beiden Unwuchtwellenhälften ausgebildeten Unwuchtmassen individuell und relativ zueinander um die Rotationsachse zu verdrehen und somit mit gegeneinander verschobener Phasenlage zueinander in Rotation zu versetzen, was die Erzeugung des Giermoments und damit die Lenkung der Bodenverdichtungsvorrichtung während des Arbeitsbetriebs ermöglicht.

In einer weiteren Ausführungsform sind die erste Unwuchtwelle und die zweite Unwuchtwelle durch die Koppelvorrichtung miteinander formschlüssig und gegenläufig drehbar koppelbar.

In dieser Ausführungsform kann die Koppelvorrichtung die erste Unwuchtwelle, die erste Unwuchtwellenhälfte und die zweite Unwuchtwellenhälfte jeweils zueinander formschlüssig koppeln. Die Koppelvorrichtung koppelt damit einerseits die erste und zweite Unwuchtwellenhälfte, die durch diese Kopplung die zweite Unwuchtwelle bilden. Die zweite Unwuchtwelle kann ebenfalls über die Koppelvorrichtung mit der ersten Unwuchtwelle formschlüssig gegenläufig gekoppelt werden. Folglich koppelt die Koppelvorrichtung formschlüssig die die Unwuchtmassen tragenden Wellen bzw. Wellenhälften und stellt somit ein gleichmäßiges Fahrverhalten gemäß einer Bedieneranforderung sicher.

In einer Ausführungsform weist die Verdrehvorrichtung einen durch die Betätigungseinrichtung bzw. die Kolben/Zylinder-Einheit verschiebbaren Steuerschieber und ein an der ersten Unwuchtwellenhälfte angeordnetes, durch den Steuerschieber axial zu der ersten Unwuchtwellenhälfte verschiebbares Eingriffselement zum formschlüssigen Eingreifen in eine Ausnehmung der Koppelvorrichtung und zum formschlüssigen Eingreifen in eine Ausnehmung der ersten Unwuchtwellenhälfte auf. Wenigstens eine der Ausnehmungen weist eine zumindest stückweise schraubenförmig verlaufende Nut auf.

Das Eingriffselement stellt in dieser Ausführungsform die formschlüssige Kopplung zwischen der ersten Unwuchtwellenhälfte und der Koppelvorrichtung her. Es kann durch den Steuerschieber verschiebbar sein und dabei eine Bewegung mit wenigstens einer axial entlang der Rotationsachse der ersten Unwuchtwellenhälfte geführten Bewegungskomponente ausführen. Es greift einerseits formschlüssig in eine Ausnehmung der ersten Unwuchtwellenhälfte ein, beispielsweise in eine Nut in der als Hohlwelle ausgebildeten ersten Unwuchtwellenhälfte. Andererseits greift das Eingriffselement formschlüssig in eine Ausnehmung der Koppelvorrichtung und/oder der Hülseneinrichtung ein, beispielsweise in eine in die Hülseneinrichtung eingebrachte Nut. Durch den zumindest stückweise schraubenförmigen Verlauf wenigstens einer der Ausnehmungen bzw. Nuten wird bei einem Verschieben des Eingriffselements die erste Unwuchtwellenhälfte relativ zur Koppelvorrichtung bzw. Hülseneinrichtung verdreht. Bei einem Stillstand des Steuerschiebers relativ zur ersten Unwuchtwellenhälfte bleibt das Eingriffselement sowohl mit der ersten Unwuchtwellenhälfte als auch mit der Hülseneinrichtung in Eingriff und stellt so die formschlüssige Kopplung her, die die gemeinsame Rotation von Unwuchtwellenhälfte und Koppelvorrichtung sicherstellt.

In einer Variante dieser Ausführungsform weist der Schwingungserreger eine weitere Verdrehvorrichtung zum Verdrehen der zweiten Unwuchtmasse und/oder der dritten Unwuchtmasse relativ zu einer anderen der Unwuchtmassen auf, wobei die weitere Verdrehvorrichtung an der zweiten Unwuchtwelle der Verdrehvorrichtung gegenüberliegend angeordnet ist. Die weitere Verdrehvorrichtung weist einen durch eine weitere Betätigungseinrichtung bzw. durch eine weitere Kolben/Zylinder-Einheit verschiebbaren weiteren Steuerschieber und ein an der zweiten Unwuchtwellenhälfte angeordnetes, durch den weiteren Steuerschieber axial zu der zweiten Unwuchtwellenhälfte verschiebbares weiteres Eingriffselement zum formschlüssigen Eingreifen in eine Ausnehmung der Koppelvorrichtung und zum formschlüssigen Eingreifen in eine weitere Ausnehmung der zweiten Unwuchtwellenhälfte auf. Wenigstens eine der Ausnehmungen weist eine zumindest stückweise schraubenförmig verlaufende Nut auf.

Die weitere Verdrehvorrichtung ermöglicht eine spiegelsymmetrische Ausgestaltung des Schwingungserregers und stellt die relative Verdrehbarkeit der zweiten Unwuchtwellenhälfte zur Koppelvorrichtung sicher.

In einer weiteren Variante kann die Koppelvorrichtung eine Hülseneinrichtung zum Aufnehmen wenigstens eines Teils der ersten Unwuchtwellenhälfte und/oder der zweiten Unwuchtwellenhälfte aufweisen.

Die Hülseneinrichtung begünstigt das formschlüssige Koppeln der ersten und der zweiten Unwuchtwellenhälfte mit der Koppelvorrichtung beispielsweise durch axiales Einstecken der jeweiligen Unwuchtwellenhälfte in die Hülsenvorrichtung, so dass sich die Hülse jeweils über ein Wellende der ersten wie auch der zweiten Unwuchtwellenhälften erstreckt. Weiterhin begünstigt sie die koaxiale Anordnung mit beispielsweise stirnseitig gegenüberliegenden Unwuchtwellenhälften. Darüber hinaus ermöglichen beispielsweise im Wesentlichen zylindrische Ausnehmungen der Hülsenvorrichtung die relative Drehbarkeit der Unwuchtwellenhälften zur Koppelvorrichtung bzw. zueinander.

In einer weiteren Variante dieser Ausführungsform weist die Hülseneinrichtung an ihrer Außenseite eine Zahnradeinrichtung zum Eingreifen in eine mit der ersten Unwuchtwelle gekoppelten weiteren Zahnradeinrichtung auf.

In dieser Ausführungsform kann die Koppelvorrichtung beispielsweise als Hülse zum beidseitigen formschlüssigen, aber relativ zur Hülse drehbaren Einkoppeln der jeweiligen Unwuchtwellenhälfte mit einem auf der Hülse aufgebrachten, umlaufenden Zahnrad ausgebildet sein. Die beiden Zahnradeinrichtungen können beispielsweise direkt kämmend ineinander eingreifen und so die formschlüssige und gegenläufig drehbare Kopplung der beiden Unwuchtwellen sicherstellen.

In einer weiteren Ausführungsform weist die Betätigungseinrichtung eine Kolben/Zylinder-Einheit auf. Alternativ kann die Betätigungseinrichtung auch eine mechanischen oder elektromechenische Stellmechnismus aufweisen.

In einer Variante dieser Ausführungsform kann die Kolben/Zylinder-Einheit hydraulisch betreibbar und eine Zuführung für Hydraulikflüssigkeit zu der Kolben/Zylinder-Einheit kann an einer axialen Stirnseite der zweiten Unwuchtwelle angeordnet sein.

In einer weiteren Variante kann axial zwischen der zweiten Unwuchtmasse und der Koppelvorrichtung eine die zweite Unwuchtwelle lagernde erste Lagervorrichtung angeordnet sein, axial zwischen der dritten Unwuchtmasse und der Koppelvorrichtung kann eine die zweite Unwuchtwelle lagernde zweite Lagervorrichtung angeordnet sein, an einer von der Koppelvorrichtung abgewandten Seite der zweiten Unwuchtmasse kann eine die zweite Unwuchtwelle lagernde dritte Lagervorrichtung angeordnet sein, und/oder an einer von der Koppelvorrichtung abgewandten Seite der dritten Unwuchtmasse kann eine die zweite Unwuchtwelle lagernde vierte Lagervorrichtung angeordnet sein.

Die erste und die zweite Lagervorrichtung können in dieser Ausführungsform ein inneres Lagerpaar bilden. Die dritte und vierte Lagervorrichtung können ein äußeres Lagerpaar bilden. Alle Lagervorrichtungen können beispielsweise ein Kugellager aufweisen und die zweite Unwuchtwelle gegen das Gehäuse des Schwingungserregers abstützen.

Durch das Anordnen der ersten und/oder zweiten Lagervorrichtung axial zwischen der Unwuchtmasse und der Koppelvorrichtung bzw. der Hülseneinrichtung und das Anordnen der dritten und/oder vierten Lagervorrichtung an der der Koppelvorrichtung abgewandten Seite der Unwuchtmasse werden elastische Achsverformungen, die durch die rotierende Unwuchtmasse in die erste Unwuchtwellenhälfte eingebracht werden, abgemildert und von der Koppelvorrichtung im Wesentlichen ferngehalten. Eine Wellenbiegung der zweiten Unwuchtwelle wird vermindert.

Folglich ist die an der Koppelvorrichtung angeordnete erste Zahnradeinrichtung wesentlich geringeren Schwingungen und geringerem Achsversatz ausgesetzt, so dass die formschlüssige Kopplung der Unwuchtwellen an der Zahnradpaarung entlastet wird. Die zur Kopplung der beiden Unwuchtwellen vorgesehene Zahnradpaarung läuft folglich geräuschärmer, und eine erhöhte Lebensdauer wird begünstigt.

Diese und weitere Merkmale der Erfindung werden nachfolgend anhand eines Beispiels unter Zuhilfenahme der begleitenden Figur näher erläutert. Die einzige
- **Figur**: zeigt einen Schnitt in der Draufsicht auf einen erfindungsgemäßen Schwingungserreger.

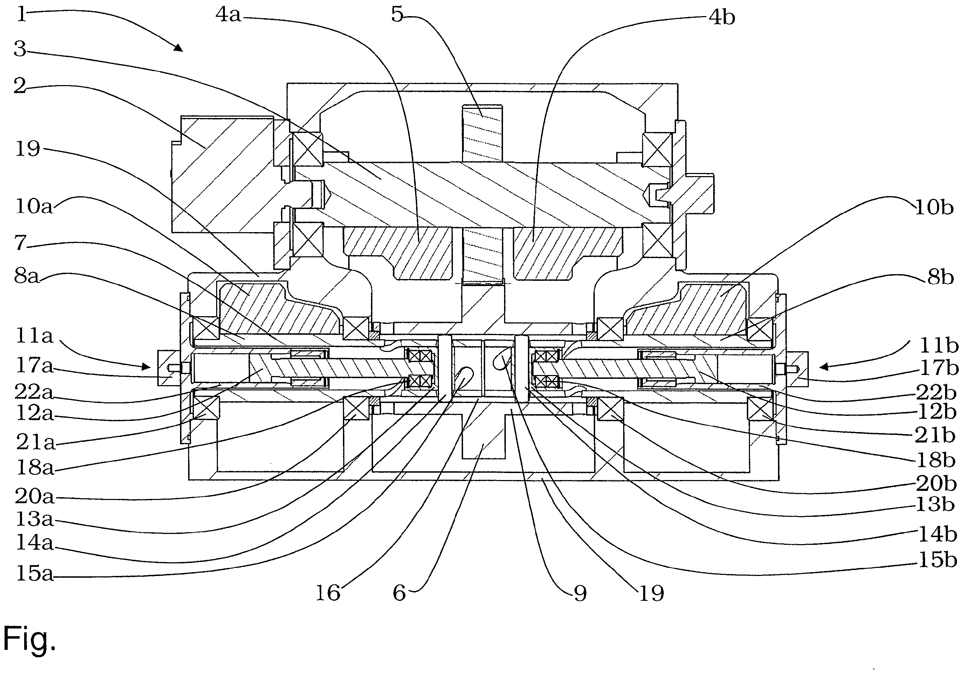

Die Figur zeigt schematisch eine Ausführungsform eines Schwingungserregers 1 in einer Ansicht von oben mit Schnitt in einer im Wesentlichen parallel zu der zu bearbeitenden Bodenfläche verlaufenden Ebene. Der Schwingungserreger 1 kann insbesondere in einer Vibrationsplatte zur Bodenverdichtung eingesetzt werden.

Der Schwingungserreger 1 weist eine durch eine Antriebsvorrichtung 2 drehend angetriebene erste Unwuchtwelle 3 mit daran angeordneten bzw. befestigten Unwuchtmassen 4a und 4b auf. Über zwei Zahnräder 5 und 6 wird die Drehbewegung der ersten Unwuchtwelle 3 formschlüssig und gegenläufig auf eine zweite Unwuchtwelle 7 übertragen.

Die zweite Unwuchtwelle 7 weist eine erste Unwuchtwellenhälfte 8a und eine zu der ersten Unwuchtwellenhälfte 8a koaxial angeordnete, relativ zu der ersten Unwuchtwellenhälfte verdrehbare zweite Unwuchtwellenhälfte 8b auf. Die beiden Unwuchtwellenhälften 8a und 8b sind beidseitig in eine zu einer Koppelvorrichtung gehörende Verstellhülse 9 eingeführt, die die beiden Unwuchtwellenhälften 8a und 8b formschlüssig, aber relativ zueinander verdrehbar koppelt. Auf der Verstellhülse 9 ist umlaufend das Zahnrad 6 angeordnet. Die Verstellhülse 9 bildet mit dem Zahnrad 6 folglich eine Koppelvorrichtung zum formschlüssigen Koppeln der ersten Unwuchtwelle 3 mit der aus den beiden Unwuchtwellenhälften 8a, 8b bestehenden zweiten Unwuchtwelle 7.

An den beiden Unwuchtwellenhäften 8a und 8b sind Verstellunwuchten 10a und 10b angeordnet bzw. befestigt. Um ein individuelles Verdrehen der Verstellunwuchten 10a, 10b um die Rotationsachse der zweiten Unwuchtwelle 7 zu erreichen, sind jeweilige Verdrehvorrichtungen 11a, 11b vorgesehen und in die als Hohlwellen ausgebildeten Unwuchtwellenhälften 8a und 8b eingelassen.

Durch die Verdrehvorrichtungen 11a, 11b kann die Phasenlage der Verstellunwuchten 10a, 10b relativ zu den an der ersten Unwuchtwelle 3 angeordneten Unwuchtmassen 4a, 4b verstellt werden. Durch die bei einer Rotation der Unwuchtmassen 4a, 4b und 10a, 10b jeweils um die gegenläufig rotierenden Unwuchtwellen 3, 7 an den Unwuchtmassen 4a, 4b, 10a, 10b wirkenden Fliehkraftvektoren kann bei verschobener Phasenlage eine Vorwärts- bzw. Rückwärtsbewegung der durch den Schwingungserreger 1 betriebenen Bodenverdichtungsvorrichtung erreicht werden. Durch ein relatives Verdrehen der Verstellunwuchten 10a, 10b zueinander wird ein Giermoment und damit eine Drehung der Bodenverdichtungsvorrichtung um eine senkrecht aus der Zeichenebene herausragende Hochachse des Schwingungserregers 1 bzw. der Bodenverdichtungsvorrichtung erzeugt.

Nachfolgend wird lediglich die Verdreheinrichtung 11a erläutert. Die Verdreheinrichtung 11b ist identisch aufgebaut und in der Fig. spiegelsymmetrisch zu der Verdreheinrichtung 11a dargestellt.

Die Verdreheinrichtung 11a weist eine hydraulische betreibbare Betätigungseinrichtung mit einem einen Kolben 12a auf, der in einer Deckelhülse angeordnet ist, welche an einem Gehäuse 19 des Schwingungserregers 1 angeordnet bzw. befestigt ist und in die Unwuchtwellenhälfte 8a eingreift. Als Teil der Deckelhülse ist ein Zylinder 22a ausgebildet, in dem der Kolben 12a axial verschiebbar gelagert ist. Die Deckelhülse, der Zylinder 22a und der Kolben 12a sind von der Unwuchtwellenhälfte 8a über Lager 18a drehentkoppelt und am Gehäuse 19 des Schwingungserregers 1 befestigt.

Der Kolben 12a kann einen Schieber 13a innerhalb der Unwuchtwellenhälfte 8a axial verlagern. Der Schieber 13a trägt einen Querzapfen 14a, der eine in einer Wandung der als Hohlwelle ausgebildeten ersten Unwuchtwellenhälfte 8a vorhandene schraubenförmige Nut 15a durchdringt. Gleichzeitig greift der Querzapfen 14a in eine Längsnut 16 ein, die an der Innenseite der Verstellhülse 9 ausgebildet ist und radial außerhalb bzw. über der schraubenförmigen Nut 15a liegt. Durch das axiale Verlagern des Schiebers 13a mit dem Querzapfen 14a wird der ersten Unwuchtwellenhälfte 8a durch den schraubenförmigen Verlauf der Nut 15a eine Drehbewegung relativ zur Verstellhülse 9 aufgezwungen. Hierdurch ändert sich die relative Drehstellung der Verstellunwucht 10a gegenüber der Verstellhülse 9, gegenüber der Verstellunwucht 10b und gegenüber der ersten Unwuchtwelle 3.

Die schraubenförmige Nut 15a bildet eine Ausnehmung der ersten Unwuchtwellenhälfte 8a und ist bevorzugt in einem Bereich der ersten Unwuchtwellenhälfte 8a angeordnet, der der mittigen Symmetrieachse des Gehäuses 19 (Erregergehäuses) und/oder der Bodenverdichtungsvorrichtung zugewandt ist. Bevorzugt ist die Ausnehmung in einer Hälfte der ersten Unwuchtwellenhälfte 8a angeordnet und/oder erstreckt sich die Ausnehmung über maximal eine Hälfte der Länge der ersten Unwuchtwellenhälfte 8a, die der mittigen Symmetrieachse zugewandt ist. Besonders bevorzugt ist die Ausnehmung in einem Drittel der ersten Unwuchtwellenhälfte 8a angeordnet und/oder erstreckt sich die Ausnehmung über maximal ein Drittel der Länge der ersten Unwuchtwellenhälfte 8a, das der mittigen Symmetrieachse zugewandt ist.

Im Arbeitsbetrieb sind die Verstellunwuchten 10a und 10b durch ihre Trägheit bestrebt, ihre jeweilige Phasenlage in nacheilender Richtung zu verlagern und dabei den Kolben 12a bzw. 12b in seine Ausgangsposition zurückzuschieben. Um das Zurückführen der Kolben 12a, 12b weiter zu unterstützen, können Federeinrichtungen vorgesehen und beispielsweise innerhalb der Zylinder 22a, 22b angeordnet sein. Die Federeinrichtungen können die Kolben 12a, 12b beispielsweise gegen eine der Verstellhülse 9 zugewandte Stirnseite der jeweiligen Zylinder 22a, 22b abstützen.

Die Verdrehvorrichtung 11a ist in dieser Anordnung fast ganz in einen Hohlraum der ersten Unwuchtwellenhälfte 8a eingelassen. Lediglich ein Einlass 17a für Hydraulikflüssigkeit zum Bewegen bzw. Beaufschlagen des Kolbens 12a steht aus der ersten Unwuchtwellenhälfte 8a hervor. Der Kolben 12a ist zumindest in einer maximalen Einschubposition vollständig in der zweiten Unwuchtwelle 7 aufgenommen und/oder in die erste Unwuchtwellenhälfte 8a eingelassen. Der Kolben 12a, der Zylinder 22a und der Einlass 17a sind dabei durch als Drehentkopplung dienenden Lager 18a von einer Rotationsbewegung der ersten Unwuchtwellenhälfte 8a und des Schiebers 13a entkoppelt.

Weiterhin kann der Endbereich des Kolbens 12a auch in einer maximalen Ausfahrposition, d.h. entfernt von der mittigen Symmetrieachse des Gehäuses 19, vollständig in der zweiten Unwuchtwelle 7 aufgenommen sein und/oder nicht aus der vom Gehäuse 19 (Erregergehäuse) gebildeten Kontur hervorragen. Unter dem Erregergehäuse ist das Gehäuse 19 ohne weitere Anbauteile zu verstehen, das zur Aufnahme der Wellen 3, 7 und Unwuchtmassen 4a, 4b, 10a, 10b dient.

In dieser Anordnung kann eine Umlaufbahn der Verstellunwucht 10a um die erste Unwuchtwellenhälfte 8a den Hohlraum, den Kolben 12a und/oder den Zylinder 22a wenigstens teilweise oder auch vollständig umschließen. Dies ermöglicht es, die Verstellunwucht 10a weit außen an der ersten Unwuchtwellenhälfte 8a, d.h. mit großem Abstand zu einer durch die Zahnräder 5, 6 verlaufende Symmetrieachse des Schwingungserregers 1 und beispielsweise direkt benachbart zu einem Gehäuse 19 des Schwingungserregers 1 anzuordnen. Folglich wirkt bei der Rotation der Verstellunwucht 10a ein großer Hebelarm, welcher eine hohe Drehrate der Bodenverdichtungsvorrichtung um die Hochachse bewirken kann.

Eine gute Steuerbarkeit der Bodenverdichtungsvorrichtung kann sich insbesondere ergeben, wenn, wie in der Figur gezeigt, die zweite und dritte Unwuchtmasse 10a, 10b (Verstellunwucht 10a, 10b) weit von der Mittelebene des Erregers entfernt angeordnet sind. Dadurch kann es sich ergeben, dass die Unwuchtmassen 4a, 4b sowie die zweiten und dritten Unwuchtmassen 10a, 10b (Verstellunwuchten 10a, 10b) derart axial zueinander versetzt angeordnet sind, dass nur eine geringe oder keine Überdeckung zwischen den Unwuchtmassen 4a, 4b, 10a, 10b vorliegt. Bevorzugt beträgt die Überdeckung einer Unwuchtmasse 4a, 4b der ersten Unwuchtwelle 3 mit einer Unwuchtmasse 10a, 10b (Verstellunwucht 10a, 10b) der zweiten Unwuchtwelle 7 maximal 50 Prozent. Zur Berechnung wird die axiale Länge der Überdeckung mit der addierten Gesamtlänge der beiden Unwuchtmassen zueinander ins Verhältnis gesetzt. Weiter bevorzugt beträgt die Überdeckung maximal 25 Prozent. Besonders bevorzugt besteht keine Überdeckung zwischen den Unwuchtmassen 4a, 4b, 10a, 10b.

Axial zwischen der Verstellunwucht 10a und der Verstellhülse 9 ist ein inneres Lager 20a und zwischen der Verstellunwucht 10b und der Verstellhülse 9 ein weiteres inneres Lager 20b angeordnet. Die Verstellhülse 9 mit dem Zahnrad 6 ist somit zwischen den benachbart angeordneten inneren Lagern 20a und 20b gelagert. Weiterhin ist die zweite Unwuchtwelle 7 durch äußere Lager 21a, 21b am Gehäuse 19 gelagert. Die äußeren Lager 21a, 21b können angrenzend bzw. in unmittelbarer Umgebung zu den Verstellunwuchten 10a, 10b angeordnet sein.

Somit ist die erste Unwuchtwellenhälfte 8a durch die Lager 20a und 21 a im Gehäuse 19 gelagert, während die zweite Unwuchtwellenhälfte 8b durch die Lager 20b und 21b im Gehäuse 19 gelagert ist. Die Verstellhülse 9 ist auf den Endbereichen der ersten Unwuchtwellenhälfte 8a sowie der zweiten Unwuchtwellenhälfte 8b positioniert und wird von diesen getragen.

Elastische Verformungen der zweiten Unwuchtwelle 7, die dieser durch die rotierenden Verstellunwuchten 10a und 10b aufgezwungen werden, werden durch die Lager 20a, 20b und 21a, 21b abgemildert. Die Verstellhülse 9 mit dem daran angeordneten Zahnrad 6 unterliegt somit nur einer geringen elastischen Verlagerung. Folglich läuft die Zahnradpaarung 5, 6 geräuschärmer und ist wesentlich geringeren mechanischen Belastungen ausgesetzt. Zudem sind die Lager 20a, 20b, 21a, 21b hinsichtlich der ersten und zweiten Unwuchtwellenhälften 8a, 8b derart angeordnet, dass die von der zweiten und dritten Unwuchtmasse 10a, 10b (Verstellunwucht 10a, 10b) aufgebrachten Lasten von den jeweils benachbart angeordneten Lagern abgetragen werden, so dass der Bereich der jeweiligen Unwuchtwellenhälfte 8a, 8b, in dem sich die Ausnehmung (schraubenförmige Nut 15a, 15b) befindet, von der Last befreit ist.

Durch die Aufteilung der zweiten Unwuchtwelle 7 in die zwei Unwuchtwellenhälften 8a und 8b ist es in der in der Fig. gezeigten Ausführungsform möglich, die Verstellunwuchten 10a und 10b direkt an den Unwuchtwellenhälften 8a und 8b anzuordnen. Die Verstellhülse 9 ist damit nicht durch die Unwuchten belastet, sondern räumlich von den zweiten und dritten Unwuchtmassen 10a, 10b (Verstellunwuchten 10a, 10b) getrennt. Zudem ist zwischen der Verstellhülse 9 und der zweiten und dritten Unwuchtmasse 10a, 10b (Verstellunwucht 10a, 10b) jeweils eine Lagerstelle angeordnet, so dass Einwirkungen der Unwuchtmassen (Verstellunwuchten 10a, 10b) auf die Hülse (Verstellhülse 9) bzw. die Gesamtheit der Verstellanordnung 9, 13a, 13b, 14a, 14b, 15a, 15b minimiert sind. Dies erhöht die Robustheit des Schwingungserregers 1. Der Drehmomentfluss im gezeigten Ausführungsbeispiel erfolgt von der Antriebsvorrichtung 2 über die erste Unwuchtwelle 3, die Zahnradpaarung 5, 6, die Verstellhülse 9, die Eingriffselemente (Querzapfen) 14a, 14b, jeweils auf die erste und zweite Unwuchtwellenhälfte 8a, 8b sowie jeweils weiter auf die zweite und dritte Unwuchtmasse 10a, 10b (Verstellunwucht 10a, 10b).

Die relative Verdrehbarkeit der Verstellunwuchten 10a und 10b wird dabei durch die mittig angeordnete Verstellhülse 9 gewährleistet. Die Verstellhülse 9 ist dabei vom Gewicht der Verstellunwuchten 10a und 10b befreit und wird darüber hinaus durch die inneren Lager 20a und 20b von der durch die rotierenden Verstellunwuchten 10a, 10b verursachen Wellenbiegung geschützt. Folglich ist ein geräuschärmerer Betrieb und eine erhöhte Lebensdauer des Schwingungserregers 1 zu erwarten.

Durch Anordnung der Verdreheinrichtungen 11a, 11b innerhalb der als Hohlwellen ausgeführten Unwuchtwellenhälften 8a, 8b können die Verstellunwuchten 10a und 10b weit außen an der zweiten Unwuchtwelle 7 und damit mit einem großen Hebelarm zur Hochachse der Bodenverdichtungsvorrichtung angeordnet werden. Dies ermöglicht eine hohe Drehdynamik und ein verbessertes Fahrverhalten der Bodenverdichtungsvorrichtung bzw. Vibrationsplatte einem Bedienerwunsch entsprechend. Fahrmanöver können schneller bewerkstelligt werden und führen zu einer höheren Produktivität der Bodenverdichtungsvorrichtung. Dies gilt insbesondere auch für ferngesteuerte Vibrationsplatten mit kompakter Bauweise.

## Patentansprüche

1. Schwingungserreger (1) für eine Bodenverdichtungsvorrichtung, mit
- einer ersten Unwuchtwelle (3), an der wenigstens eine erste Unwuchtmasse (4a, 4b) angeordnet ist,
- einer zu der ersten Unwuchtwelle (3) achsparallel angeordneten, mit der ersten Unwuchtwelle (3) formschlüssig gegenläufig drehbar gekoppelten zweiten Unwuchtwelle (7), an der wenigstens eine zweite Unwuchtmasse (10a) angeordnet ist,
- einer Antriebsvorrichtung (2) zum drehenden Antreiben einer der Unwuchtwellen (3, 7), und mit
- einer durch eine Betätigungseinrichtung (12a, 22a, 12b, 22b) betätigbaren Verdrehvorrichtung (11a, 11b) zum Verdrehen der zweiten Unwuchtmasse (10a) relativ zu der ersten Unwuchtmasse (4a, 4b), wobei
- die zweite Unwuchtwelle (7) wenigstens einen Hohlraum aufweist,
- die Betätigungseinrichtung (12a, 22a, 12b, 22b) wenigstens teilweise innerhalb des Hohlraums angeordnet ist,
- die zweite Unwuchtwelle (7) eine die zweite Unwuchtmasse (10a) tragende erste Unwuchtwellenhälfte (8a) und eine zu der ersten Unwuchtwellenhälfte (8a) koaxial angeordnete, relativ zu der ersten Unwuchtwellenhälfte (8a) verdrehbare, eine dritte Unwuchtmasse (10b) tragende zweite Unwuchtwellenhälfte (8b) aufweist,
- durch die Verdrehvorrichtung (11a) die erste Unwuchtwellenhälfte (8a) relativ zu der zweiten Unwuchtwellenhälfte (8b) verdrehbar ist, und wobei
- die Betätigungseinrichtung (12a, 22a, 12b, 22b) eine Kolben/ZylinderEinheit aufweist, **dadurch gekennzeichnet, dass** die Kolben/Zylindereinheit (12a, 12b, 22a, 22b) durch eine Drehentkopplungseinrichtung (18a, 18b) von einer Rotation der zweiten Unwuchtwelle (7) entkoppelt ist.

2. Schwingungserreger (1) nach Anspruch 1, wobei
- eine Umlaufbahn der zweiten Unwuchtmasse (10a) um die zweite Unwuchtwelle (7) den Hohlraum und/oder die Betätigungseinrichtung (12a, 22a, 12b, 22b) wenigstens teilweise umschließt.

3. Schwingungserreger (1) nach einem der vorstehenden Ansprüche, mit
- einer Koppelvorrichtung (9) zum formschlüssigen, relativ zueinander verdrehbaren Koppeln der ersten Unwuchtwellenhälfte (8a) und der zweiten Unwuchtwellenhälfte (8b).

4. Schwingungserreger (1) nach einem der vorstehenden Ansprüche, wobei
- die Verdrehvorrichtung (11a) einen durch die Betätigungseinrichtung (12a, 22a) verschiebbaren Steuerschieber (13a) und ein an der ersten Unwuchtwellenhälfte (8a) angeordnetes, durch den Steuerschieber (13a) axial zu der ersten Unwuchtwellenhälfte (8a) verschiebbares Eingriffselement (14a) zum formschlüssigen Eingreifen in eine Ausnehmung (16) der Koppelvorrichtung (9) und zum formschlüssigen Eingreifen in eine Ausnehmung (15a) der ersten Unwuchtwellenhälfte (8a) aufweist, wobei
- wenigstens eine der Ausnehmungen (15a, 16) eine zumindest stückweise schraubenförmig verlaufende Nut aufweist.

5. Schwingungserreger (1) nach Anspruch 4, mit
- einer weiteren Verdrehvorrichtung (11b) zum Verdrehen der zweiten Unwuchtmasse (10a) und/oder der dritten Unwuchtmasse (10b) relativ zu einer anderen der Unwuchtmassen (4a, 4b, 10a, 10b), wobei die weitere Verdrehvorrichtung (11b) an der zweiten Unwuchtwelle (7) der Verdrehvorrichtung (11a) gegenüberliegend angeordnet ist, wobei
- die weitere Verdrehvorrichtung (11b) einen durch eine weitere Betätigungseinrichtung (12b, 22b) verschiebbaren weiteren Steuerschieber (13b) und ein an der zweiten Unwuchtwellenhälfte (8b) angeordnetes, durch den weiteren Steuerschieber (13b) axial zu der zweiten Unwuchtwellenhälfte (8b) verschiebbares weiteres Eingriffselement (14b) zum formschlüssigen Eingreifen in eine Ausnehmung (16) der Koppelvorrichtung (9) und zum formschlüssigen Eingreifen in eine weitere Ausnehmung (15b) der zweiten Unwuchtwellenhälfte (8b) aufweist, wobei
- wenigstens eine der Ausnehmungen (15b, 16) eine zumindest stückweise schraubenförmig verlaufende Nut aufweist.

6. Schwingungserreger (1) nach Anspruch 3 oder einem der Ansprüche 4 und 5 in Verbindung mit Anspruch 3, wobei
- die Koppelvorrichtung (5, 6, 9) eine Hülseneinrichtung (9) zum Aufnehmen wenigstens eines Teils der ersten Unwuchtwellenhälfte (8a) und/oder der zweiten Unwuchtwellenhälfte (8b) aufweist.

7. Schwingungserreger (1) nach Anspruch 6, wobei
- die Hülseneinrichtung (9) an ihrer Außenseite eine Zahnradeinrichtung (6) zum Eingreifen in eine mit der ersten Unwuchtwelle (3) gekoppelte weitere Zahnradeinrichtung (5) aufweist.

8. Schwingungserreger (1) nach einem der vorstehenden Ansprüche, wobei
- die Kolben/Zylinder-Einheit (12a, 22a, 12b, 22b) hydraulisch betreibbar ist und
- eine Zuführung (17a, 17b) für Hydraulikflüssigkeit zu der Kolben/ZylinderEinheit (12a, 22a, 12b, 22b) an einer axialen Stirnseite der zweiten Unwuchtwelle (7) angeordnet ist.

9. Schwingungserreger (1) nach Anspruch 3 oder einem der Ansprüche 4 bis 8 in Verbindung mit Anspruch 3, wobei
- axial zwischen der zweiten Unwuchtmasse (10a) und der Koppelvorrichtung (9) eine die zweite Unwuchtwelle (7) lagernde erste Lagervorrichtung (20a) angeordnet ist,
- axial zwischen der dritten Unwuchtmasse (10b) und der Koppelvorrichtung (9) eine die zweite Unwuchtwelle (7) lagernde zweite Lagervorrichtung (20b) angeordnet ist,
- an einer von der Koppelvorrichtung (9) abgewandten Seite der zweiten Unwuchtmasse (10a) eine die zweite Unwuchtwelle (7) lagernde dritte Lagervorrichtung (21a) angeordnet ist, und/oder
- an einer von der Koppelvorrichtung (9) abgewandten Seite der dritten Unwuchtmasse (10b) eine die zweite Unwuchtwelle (7) lagernde vierte Lagervorrichtung (21b) angeordnet ist.

## Claims

1. Vibration exciter (1) for a ground compacting device having
- a first unbalanced shaft (3) on which at least one first unbalanced mass (4a, 4b) is disposed,
- a second unbalanced shaft (7) which is disposed axially in parallel with the first unbalanced shaft (3), is coupled in a form-locking manner to the first unbalanced shaft (3) in a counter-rotatable manner and on which at least one second unbalanced mass (10a) is disposed,
- a drive device (2) for rotatably driving one of the unbalanced shafts (3, 7), and having
- a turning device (11a, 11b) which can be actuated by an actuation device (12a, 22a, 12b, 22b) in order to turn the second unbalanced mass (10a) relative to the first unbalanced mass (4a, 4b), wherein
- the second unbalanced shaft (7) has at least one cavity,
- the actuation device (12a, 22a, 12b, 22b) is disposed at least partially within the cavity,
- the second unbalanced shaft (7) comprises a first unbalanced shaft half (8a), supporting the second unbalanced mass (10a), and a second unbalanced shaft half (8b) disposed coaxially with respect to the first unbalanced shaft half (8a), able to turn relative to the first unbalanced shaft half (8a) and supporting a third unbalanced mass (10b),
- by means of the turning device (11a) the first unbalanced shaft half (8a) can be turned relative to the second unbalanced shaft half (8b), and wherein
- the actuation device (12a, 22a, 12b, 22b) comprises a piston/cylinder unit,
**characterised in that**
the piston/cylinder unit (12a, 12b, 22a, 22b) is decoupled from a rotation of the second unbalanced shaft (7) by a rotation decoupling device (18a, 18b).

2. Vibration exciter (1) as claimed in claim 1, wherein
- an orbital path of the second unbalanced mass (10a) about the second unbalanced shaft (7) at least partially surrounds the cavity and/or the actuation device (12a, 22a, 12b, 22b).

3. Vibration exciter (1) as claimed in any one of the preceding claims, having
- a coupling device (9) for form-locking coupling of the first unbalanced shaft half (8a) and of the second unbalanced shaft half (8b) so that they can turn relative to one another.

4. Vibration exciter as claimed in any one of the preceding claims, wherein
- the turning device (11a) comprises a control slide (13a), which can be displaced by the actuation device (12a, 22a), and an engagement element (14a) which is disposed on the first unbalanced shaft half (8a), can be displaced by the control slide (13a) axially with respect to the first unbalanced shaft half (8a) and is intended for form-locking engagement into an aperture (16) of the coupling device (9) and for form-locking engagement into an aperture (15a) of the first unbalanced shaft half (8a), wherein
- at least one of the apertures (15a, 16) comprises a groove of which at least parts extend in a helical manner.

5. Vibration exciter (1) as claimed in claim 4, having
- a further turning device (11b) for turning the second unbalanced mass (10a) and/or the third unbalanced mass (10b) relative to another of the unbalanced masses (4a, 4b, 10a, 10b), wherein the further turning device (11b) is disposed on the second unbalanced shaft (7) opposite the turning device (11a), wherein
- the further turning device (11b) comprises a further control slide (13b), which can be displaced by a further actuation device (12b, 22b), and a further engagement element (14b), which is disposed on the second unbalanced shaft half (8b), can be displaced by the further control slide (13b) axially with respect to the second unbalanced shaft half (8b) and is intended for form-locking engagement into an aperture (16) of the coupling device (9) and for form-locking engagement into a further aperture (15b) of the second unbalanced shaft half (8b), wherein
- at least one of the apertures (15b, 16) comprises a groove of which at least parts extend in a helical manner.

6. Vibration exciter (1) as claimed in claim 3 or any one of claims 4 and 5 in combination with claim 3, wherein
- the coupling device (5, 6, 9) comprises a sleeve unit (9) for receiving at least one part of the first unbalanced shaft half (8a) and/or of the second unbalanced shaft half (8b).

7. Vibration exciter (1) as claimed in claim 6, wherein
- on its outside, the sleeve unit (9) comprises a toothed wheel arrangement (6) for engagement into a further toothed wheel arrangement (5) coupled to the first unbalanced shaft (3).

8. Vibration exciter (1) as claimed in any one of the preceding claims, wherein
- the piston/cylinder unit (12a, 22a, 12b, 22b) can by operated hydraulically and
- a supply means (17a, 17b) for hydraulic fluid to the piston/cylinder unit (12a, 22a, 12b, 22b) is disposed on an axial end face of the second unbalanced shaft (7).

9. Vibration exciter (1) as claimed in claim 3 or any one of claims 4 to 8 in combination with claim 3, wherein
- a first bearing device (20a) mounting the second unbalanced shaft (7) is disposed axially between the second unbalanced mass (10a) and the coupling device (9),
- a second bearing device (20b) mounting the second unbalanced shaft (7) is disposed axially between the third unbalanced mass (10b) and the coupling device (9),
- a third bearing device (21a) mounting the second unbalanced shaft (7) is disposed on a side of the second unbalanced mass (10a) facing away from the coupling device (9), and/or
- a fourth bearing device (21b) mounting the second unbalanced shaft (7) is disposed on a side of the third unbalanced mass (10b) facing away from the coupling device (9).

## Revendications

1. Générateur de vibrations (1) pour un dispositif de compactage de sol, avec
- un premier arbre à balourd (3), sur lequel est disposée au moins une masse de balourd (4a, 4b),
- un deuxième arbre à balourd (7), disposé parallèlement au premier arbre à balourd (3), et couplé de manière rotative en sens inverse par complémentarité de forme avec le premier arbre à balourd (3), sur lequel est disposée au moins une deuxième masse de balourd (10a),
- un dispositif d'entraînement (2) pour l'entraînement en rotation d'un des arbres à balourd (3, 7) et avec
- un dispositif d'entraînement en rotation (11a, 11b) pouvant être actionné par un dispositif d'actionnement (12a, 22a, 12b, 22b) pour l'entraînement en rotation de la deuxième masse de balourd (10a) par rapport à la première masse de balourd (4a, 4b),
- le deuxième arbre à balourd (7) comprenant au moins un espace creux,
- le dispositif d'actionnement (12a, 22a, 12b, 22b) étant disposé au moins partiellement à l'intérieur de l'espace creux,
- le deuxième arbre à balourd (7) comprenant une première moitié d'arbre à balourd (8a) supportant la deuxième masse de balourd (10a) et une deuxième moitié d'arbre à balourd (8b) supportant une troisième masse de balourd (10b) disposée de manière coaxiale par rapport à la première moitié d'arbre à balourd (8a), rotative par rapport à la première moitié d'arbre à balourd (8a),
- le dispositif d'entraînement en rotation (11a) permettant d'entraîner en rotation la première moitié d'arbre à balourd (8a) par rapport à la deuxième moitié d'arbre à balourd (8b) et
- le dispositif d'actionnement (12a, 22a, 12b, 22b) comprenant un ensemble piston/cylindre,
**caractérisé en ce que** l'ensemble piston/cylindre (12a, 22a, 12b, 22b) est découplé d'une rotation du deuxième arbre à balourd (7) par un dispositif de découplage de rotation (18a, 18b).

2. Générateur de vibrations (1) selon la revendication 1,
- une trajectoire circulaire de la deuxième masse de balourd (10a) entourant au moins partiellement autour du deuxième arbre à balourd (7) l'espace creux et/ou le dispositif d'actionnement (12a, 22a, 12b, 22b).

3. Générateur de vibrations (1) selon l'une des revendications précédentes, avec
- un dispositif de couplage (9) pour le couplage en rotation mutuelle par complémentarité de forme de la première moitié d'arbre à balourd (8a) et de la deuxième moitié d'arbre à balourd (8b).

4. Générateur de vibrations (1) selon l'une des revendications précédentes,
- le dispositif d'entraînement en rotation (11a) comprenant un tiroir de commande (13a) pouvant être déplacé par le dispositif d'actionnement (12a, 22a) et un élément d'emboîtement (14a), disposé sur la première moitié d'arbre à balourd (8a), pouvant être déplacé par le tiroir de commande (13a) de manière axiale par rapport à la première moitié d'arbre à balourd (8a), pour l'emboîtement par complémentarité de forme dans un évidement (16) du dispositif de couplage (9) et pour l'emboîtement par complémentarité de forme dans un évidement (15a) de la première moitié d'arbre à balourd (8a),
- au moins un des évidements (15a, 16) comprenant une rainure s'étendant au moins partiellement de manière hélicoïdale.

5. Générateur de vibrations (1) selon la revendication 4, avec
- un autre dispositif d'entraînement en rotation (11b) pour l'entraînement en rotation de la deuxième masse de balourd (10a) et/ou de la troisième masse de balourd (10b) par rapport à une autre masse de balourd (4a, 4b, 10a, 10b), l'autre dispositif d'entraînement en rotation (11b) étant disposé sur le deuxième arbre à balourd (7) en face du dispositif d'entraînement en rotation (11a),
- l'autre dispositif d'entraînement en rotation (11 b) comprenant un autre tiroir de commande (13b) pouvant être déplacé par un dispositif d'actionnement (12b, 22b) et un élément d'emboîtement (14b), disposé sur la deuxième moitié d'arbre à balourd (8b), pouvant être déplacé par l'autre tiroir de commande (13b) de manière axiale par rapport à la deuxième moitié d'arbre à balourd (8b) pour l'emboîtement par complémentarité de forme dans un évidement (16) du dispositif de couplage (9) et pour l'emboîtement par complémentarité de forme dans un autre évidement (15b) de la deuxième moitié d'arbre à balourd (8b),
- au moins un des évidements (15b, 16) comprenant une rainure s'étendant au moins partiellement de manière hélicoïdale.

6. Générateur de vibrations (1) selon la revendication 3 ou l'une des revendications 4 et 5 en lien avec la revendication 3,
- le dispositif de couplage (5, 6, 9) comprenant un dispositif à manchon (9) pour le logement d'au moins une partie de la première moitié d'arbre à balourd (8a) et/ou de la deuxième moitié d'arbre à balourd (8b).

7. Générateur de vibrations (1) selon la revendication 6,
- le dispositif à manchon (9) comprenant, au niveau de son côté extérieur, un dispositif à roues dentées (6) pour l'engrènement avec un autre dispositif à roues dentées (5) couplé avec le premier arbre à balourd (3).

8. Générateur de vibrations (1) selon l'une des revendications précédentes,
- l'ensemble piston/cylindre (12a, 22a, 12b, 22b) pouvant être actionné de manière hydraulique et
- une conduite d'alimentation (17a, 17b) pour un liquide hydraulique vers l'ensemble piston/cylindre (12a, 22a, 12b, 22b) est disposé sur un côté frontal axial du deuxième arbre à balourd (7).

9. Générateur de vibrations (1) selon la revendication 3 ou une des revendications 4 à 8, en lien avec la revendication 3,
- un premier dispositif à palier (20a) logeant le deuxième arbre à balourd (7) étant disposé axialement entre la deuxième masse de balourd (10a) et le dispositif de couplage (9),
- un deuxième dispositif à palier (20b) logeant le deuxième arbre à balourd (7) étant disposé axialement entre la troisième masse de balourd (10b) et le dispositif de couplage (9),
- un troisième dispositif à palier (21a) logeant le deuxième arbre à balourd (7) étant disposé sur un côté de la deuxième masse de balourd (10a) opposé au dispositif de couplage (9) et/ou
- un quatrième dispositif à palier (21 b) logeant le deuxième arbre à balourd (7) étant disposé sur un côté de la troisième masse de balourd (10b) opposé au dispositif de couplage (9).
